# EUROPÄISCHE PATENTSCHRIFT

(11) **EP 1 224 920 B1**
(45) Veröffentlichungstag und Bekanntmachung des Hinweises auf die Patenterteilung: **02.08.2006**
(21) Anmeldenummer: 01250015.3
(22) Anmeldetag: 10.01.2001
(51) Int. Cl.: A61C 8/00, A61C 3/16

(54) **Dentales Implantat-Prothetik-System**
Dental implant-prosthetic system
Système dentaire implant-prosthétique

(43) Veröffentlichungstag der Anmeldung: 24.07.2002
(73) Patentinhaber: Biomed Est., 9490 Vaduz (LI)
(72) Erfinder: Ihde, Stefan Dr., 8738 Uetliburg (CH)
(74) Vertreter: Radwer, Dieter

(56) Entgegenhaltungen:
- EP-A- 0 935 949
- WO-A-98/16168
- WO-A-99/39651
- US-A- 5 660 545
- US-A- 5 803 735

## Beschreibung

Die Erfindung betrifft ein dentales Implantat-Prothetik-System, bestehend aus einem in den Knochen des Ober- oder Unterkiefers einzusetzenden Implantatkörper, einem Abutment oder Zementierpfosten zur Aufnahme eines Brückengerüstes oder eines anderen Prothetikteiles und einem Löseinstrument.

Dentale Implantate zur Aufnahme einer Krone, eines Brückengerüstes oder eines anderweitigen Prothetikteiles sind bereits in den unterschiedlichsten Ausführungsformen bekannt. Die vorgeschlagenen Lösungen lassen sich in zwei Hauptgruppen einteilen. Den ein- und mehrteiligen, aus einem Basisteil mit Abutment oder einem Zementierpfosten bestehenden Implantaten - DE 40 41 378 A1, DE 197 13 012 A1, DE 197 55 986 A1 - und den Implantaten mit einer mehrteiligen konstruktiven Gestaltung, deren Bauteile durch Formschluss- und Schraubverbindungen zu einem System miteinander verbindbar sind - DE 195 09 118 A1, DE 198 50 097 A1, EP 0 685 208 A1.

Die Implantate und Prothetikteile weisen regelmäßig senkrechte, zur Längsachse des Implantates orientierte Bohrungen - DE 40 41 378 A1, DE 197 13 012 A1, DE 198 50 097 A1 - oder unter einem Winkel zur Längsachse angeordnete Bohrungen auf - DE 195 09 118 A1, DE 197 55 986 A1, EP 0 685 208 A1 - um eine Schraubverbindung zwischen dem Prothetikteil, den konstruktiven Bauteilen des Implantats und dem implantierten Basisteil herzustellen und/oder die Schraubverbindungen oder die getroffene Anpassung der Aufbauteile des Implantats an die natürliche Anatomie des Ober- oder Unterkiefers zu sichern.

Der Vorteil der mehrteiligen Implantate liegt vor allem in der guten Anpassung an die individuellen, anatomischen Bedingungen des Ober- oder Unterkiefers und den relativ einfachen Manipulationen beim chirurgischen Eingriff zum Einsetzen des Implantates.

In der Vergangenheit hat sich aber gezeigt, dass sich die Schraubverbindungen des Implantates oftmals lösen und wiederholte, dentale Eingriffe notwendig sind, um das Implantat wieder zu fixieren und zu stabilisieren. In zunehmendem Maße geht man deshalb wieder dazu über, ein- und zweiteilig aufgebaute Implantate einzusetzen, bei denen das Prothetikteil durch Zementierungen mit dem Implantat verbunden wird.

Gegenüber den Implantaten mit mehrteiligem konstruktivem Aufbau gewährleisten die ein- und zweiteiligen Implantate mit zementiertem Prothetikteil eine dauerhafte, sichere und feste Verbindung.

Der Nachteil dieser Lösung besteht jedoch darin, dass im Bedarfsfall die zementierte Verbindung nur sehr schwer gelöst werden kann und in vielen Fällen mit einer Beschädigung oder Zerstörung des Prothetikteiles und/oder der Überkonstruktion verbunden ist.

Ein mechanisches Verfahren zum Lösen eines durch Zementierung oder Klebeschicht mit einem Zahnstumpf fest verbundenen Prothetikteiles ist aus DE 198 20 352 A1 bekannt. Bei dieser Lösung wird ein mechanisch angetriebens Halteglied auf das Prothetikteil aufgesetzt und eine drehfeste Verbindung mit dem Prothetikteil hergestellt. Mit Hilfe der elektromechanischen Vorrichtung wird dann eine oszillierende Schwingung um die Hochachse des Prothetikteils erzeugt, die durch das entstehende Torsionsmoment die Zement- und Klebeschicht zwischen dem Prothetikteil und dem Zahnstumpf schmerzfrei löst.

Abgesehen von den relativ kostenintensiven zahnärztlichen Handgeräten ist die Anwendung dieser Lösung für durch Zementierung oder eine Klebeschicht hergestellte Verbindungen zwischen Implantat und Prothetikteil nicht unbedenklich, da durch die oszillierende Bewegung und das entstehende Torsionsmoment ein ungewolltes Lockern bzw. Lösen des implantierten Basisteils im Ober- oder Unterkiefer nicht ausgeschlossen werden kann.

Ein weiterer Vorschlag zur Lösung einer durch Zementierung hergestellten Verbindung zwischen einem Aufbauteil, dass die Prothetik trägt, und einem Abutment, das von der im Kieferknochen eingesetzten Implantatbasis aufgenommen wird, ist aus WO 99/39651 bekannt. Die bestehende Verbindung zwischen dem Aufbauteil und dem Abutment wird mit Hilfe einer distal gerichtete Kraft P gelöst, die nach einer bevorzugten Ausführungsform des Lösungsvorschlages durch Hebelwirkung eines Hand-Hebel Werkzeuges erzeugt wird. Hierzu sind das Aufbauteil und das Abutment mit einer Öffnung versehen, in die ein Löseschenkel des Werkzeuges eingesetzt wird, um das Aufbauteil vom Abutment abzuhebeln, wobei sich der Löseschenkel auf der Implantatbasis abstützt.

Der Erfindung liegt die Aufgabe zugrunde, ein dentales Implantat-Prothetik-System anzugeben, das ein relativ leichtes Lösen eines mit dem Implantat kraftschlüssig fest verbundenen Aufbauteiles ohne Beschädigungen des Aufbauteiles oder des vom Aufbauteil getragenen Prothetikteiles ermöglicht.

Erfindungsgemäß wird die Aufgabe durch ein dentales Implantat-Prothetik-System mit den im Anspruch 1 angegebenen Merkmalen und einem Löseinstrument nach Anspruch 12 gelöst. Vorteilhafte Weiterbildungen der Erfindung ergeben sich aus den Unteransprüchen 2 bis 11 und 13.

Nach einer ersten Ausführungsform der Erfindung gemäß den Merkmalen von Anspruch 1 besitzt das in den Ober- oder Unterkiefer einzusetzende Implantat ein Abutment, das ein Aufbauteil mit einer individuell angefertigten Krone trägt. Das Aufbauteil weist im Basisbereich eine in etwa horizontal zur Längsachse des Implantats angeordnete Aufnahmebohrung auf, in die zum Lösen der durch Zementieren oder Kleben hergestellte Verbindung zwischen dem Außenmantel des Abutments und den Innenwandflächen des Aufbauteiles ein Lösezapfen eingesteckt wird. Der Lösezapfen ist Bestandteil eines einfachen Löseinstrumentes, das durch einen Hebelarm und den am Hebelarm angeschweißten Lösezapfen gebildet wird. Der Lösezapfen, der nach dem bestimmungsgemäßen Positionieren in der Aufnahmebohrung mit seiner Stirnfläche an einen zylindrischen Abschnitt des Abutments oder des Implantatkörpers anliegt, besitzt eine Hebefläche, die mit einer Anlageschulter zusammenwirkt. Diese Anlageschulter ist Teil des Abutments und wird durch einen zylindrischen Abschnitt im Mittelabschnitt des Abutments und seinem Fußteil gebildet. Alternativ kann diese Anlageschulter auch Teil eines Implantatkörpers oder eines Zementierpfostens sein - Anspruch 3.

Durch Verdrehen des eingesteckten Lösungszapfens um seine Längsachse kommt die Hebefläche zur Anlage auf die Anlageschulter. Durch weiteres Verdrehen des Lösezapfens in der Aufnahmebohrung entsteht zwischen der Hebefläche und der Anschlagschulter eine Hebelwirkung, die eine zum Implantatkopf gerichtete Hebekraft erzeugt. Durch diese Hebekraft wird die bestehende Verbindung zwischen dem Abutment und dem Aufbauteil gelöst, so dass die Krone mit dem Aufbauteil auf einfache Weise vom Implantat abgenommen werden kann.

Der Lösezapfen weist unterhalb seiner Längsachse eine Aussparung auf, die eine bestimmungsgemäße Positionierung des Werkzeuges mit dem Lösezapfen unterstützt und zur exakten Auflage der Hebefläche auf die Anlageschulter für das nachfolgende Lösen der Verbindung zwischen Aufbauteil und Abutment bzw. dem Zementierpfosten beiträgt.

Vorteilhafterweise kann die Hebefläche des Lösungszapfens als Kurve ausgebildet sein - Anspruch 7, die in den Außenmantel des Lösezapfens ausmündet und zur Längsachse des Lösezapfens eine zunehmende Steigung aufweist. Mit Hilfe der als Kurve ausgebildeten Hebefläche werden größere Hebewege und höhere Kräfte zum Lösen der Zementierung bzw. der Klebeverbindung erreicht.

Gemäß einer vorteilhaften Weiterbildung - Anspruch 3 - ist das erfindungsgemäße Aufbauteil mit der Aufnahmebohrung für den Lösezapfen auf einen Zementierpfosten aufgesetzt, der Teil eines einstückig ausgebildeten Implantats ist. Die Anlageschulter für die Hebefläche des Lösezapfens wird in diesem Falle durch eine Kopffläche des Implantatkörpers gebildet.

Nach Anspruch 4 wird das einteilige Implantat durch ein Schraubimplantat und ein Abutment gebildet. Das Abutment zur Aufnahme eines Aufbauteiles entsprechend den Merkmalen nach Anspruch 1 besitzt wiederum eine Anlageschulter, die mit der Hebefläche eines in die Aufnahmebohrung des Aufbauteiles einzusteckenden Lösezapfens zum Lösen der durch Zementieren oder Kleben hergestellten Verbindung zwischen Abutment und Aufbauteil zusammenwirkt.

Bei einer ersten Ausführungsform für ein lateral einzusetzendes, basalosseointegrierbares Implantat entsprechend Anspruch 5 ist das erfindungsgemäß ausgebildete Abutment zur Aufnahme eines Aufbauteiles mit den Merkmalen nach Anspruch 1 und 2 auf das Kopfgewinde des Implantatschaftes aufgeschraubt. In Abwandlung dieser Ausführungsform können Abutment und Implantat natürlich auch zu einem einstückigen Implantat zusammengefasst werden.

Da sich der in die Aufnahmebohrung eingedrungene Zementierungs-Zement oder Kleber nur sehr schwer wieder entfernen lässt, ist es zweckmäßig, die Aufnahmebohrung vor oder während der Herstellung der Verbindung zwischen Abutment und Aufbauteil durch einen geeigneten Stopfen zu verschließen. Dieser Stopfen, der vorzugsweise aus einem elastischen Material, wie beispielsweise Silikon, Gummi, Nylon, Delrin u.a., hergestellt werden kann, lässt sich für den Fall, dass die Verbindung zwischen Abutment und Aufbauteil gelöst werden muß, relativ leicht entfernen und verhindert gleichzeitig das Ansammeln von Bakterien und Verschmutzungen im Bereich der Aufnahmebohrung. Die Aufnahmebohrung kann aber auch durch eine Schraube oder durch ein anderweitiges, einschraubbares Element verschlossen werden.

Die vorgeschlagene Lösung gewährleistet durch die kraftschlüssige Verbindung zwischen dem Aufbauteil und dem Abutment einen dauerhaften, festen Sitz der auf dem Implantat aufgesetzten Krone oder des aufgesetzten Brückenteiles und ermöglicht andererseits ein schnelles und relativ einfaches Lösen der festen, ansonsten nur schwer lösbaren kraftschlüssigen Verbindungen, die durch Zementierungen oder Klebeschichten hergestellt worden sind. Für das Lösen der Zementierung oder Klebeverbindung ist lediglich ein einfaches kostengünstiges Löseinstrument erforderlich, wobei der notwendige Kostenaufwand für die konstruktive Gestaltung des Aufbauteiles ebenfalls sehr gering ist.

Die Erfindung soll nachstehend an einem Ausführungsbeispiel näher erläutert werden. In der dazugehörigen Zeichnung zeigen:
- Fig. 1: eine erste Ausführung des Implantat-Prothetik-Systems für ein in den Ober- oder Unterkieferknochen einzusetzendes Implantat,
- Fig. 2: das Implantat-Prothetik-System unter Verwendung eines einstückig ausgebildeten Implantats mit einem Zementierpfosten,
- Fig. 3: eine analoge Ausführung zu Fig. 2, bei der das Implantat zweiteilig ausgebildet und der Zementierpfosten mit dem Implantatkörper formschlüssig verbunden ist,

- Fig. 4: das Implantat-Prothetik-System unter Verwendung eines Schraubimplantates,
- Fig. 5: die Anwendung der erfindungsgemäßen Lösung an einem von lateral einzusetzenden basalosseointegrierbarem Implantat

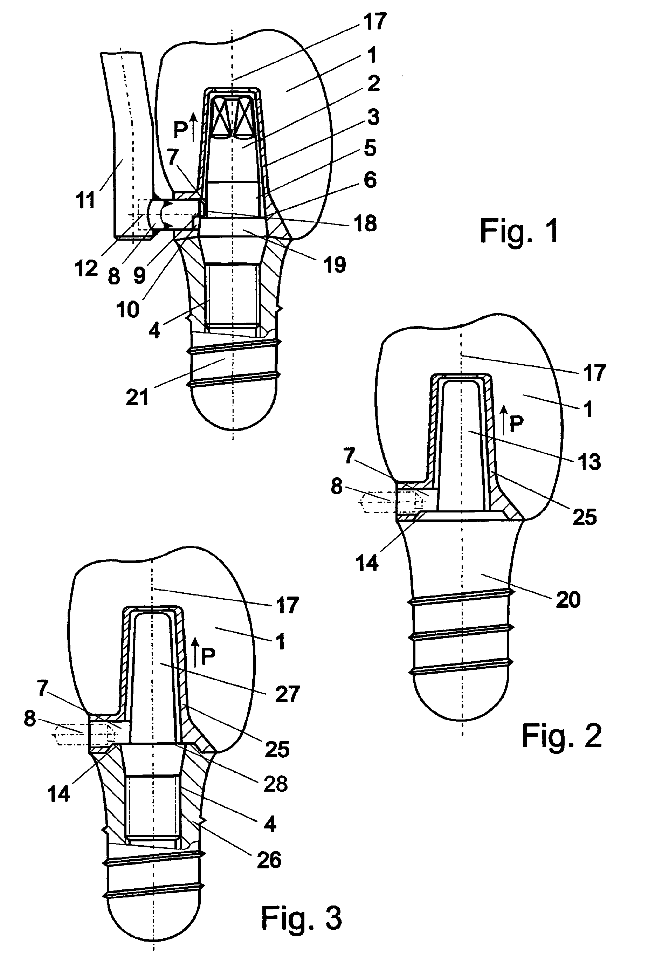

Bei dem Implantat-Prothetik-System nach Fig. 1 ist in das Implantat 21, das in den Knochen des Ober- oder Unterkiefers eingesetzt wird, mittels Gewinde 4 ein Abutment 2 fest eingeschraubt und auf das Abutment 2 ein Aufbauteil 3 mit einem aufgesinterten Prothetikteil, im vorliegenden Beispiel eine Krone 1 aus einem keramischen Material, aufgesetzt. Die dauerhaft sichere und feste Verbindung zwischen dem Abutment 2 und dem Aufbauteil 3 wird durch eine Zementierung oder durch das Auftragen einer Klebeschicht zwischen der Mantelfläche des Abutments 2 und der Innenwandfläche des Aufbauteiles 3 hergestellt.

Das Aufbauteil 3 besitzt im Basisbereich eine in etwa horizontal zur Längsachse 17 des Implantats 21 angeordnete Aufnahmebohrung 7, in die zum Lösen der festen Verbindung zwischen dem Abutment 2 und dem Aufbauteil 3 der Lösezapfen 8 eines Löseinstruments 11 eingesteckt wird. Das recht einfache und kostengünstige Löseinstrument 11 besteht aus einem Hebel und dem am Hebel angeschweißten Lösezapfen 8.

Der Lösezapfen 8 weist eine Hebefläche 9 auf, die mit einer Auflageschulter 6 des Abutments 3 zusammenwirkt. Durch Verdrehen des Lösezapfens 8 um seine Längsachse 12 kommt die Hebefläche 9 zur Anlage auf der Auflageschulter 6 und ruft eine Hebelwirkung hervor, die eine zum Kopf des Implantats gerichtete Hebekraft P erzeugt und die feste Verbindung zwischen dem Aufbauteil 3 und dem Abutment 2 löst. Gemäß Fig. 1 wird die Anlageschulter 6 durch einen zylindrischen Abschnitt 5 im Fußbereich des Abutments 3 und der Abstützbasis 19 gebildet.

Der in die Aufnahmebohrung 7 einzusteckende Lösezapfen 8 besitzt eine bis in den Bereich seiner Längsachse 12 reichende Aussparung 10, durch die das Einsetzen des Lösezapfens 8 in die Aufnahmebohrung erleichtert und eine lagegenaue Positionierung der Hebefläche 9 auf der Anlageschulter 6 für das nachfolgende Lösen der Verbindung zwischen Abutment 2 und Aufbauteil 3 vorgenommen werden kann.

Bei der in Fig. 2 gezeigten Ausführung der Erfindung für ein einstückiges Implantat 20 mit einem Zementierpfosten 13, wird die Anlageschulter, die mit der Hebefläche 9 des in die Aufnahmebohrung 7 einzusteckenden Lösezapfens 8 zusammenwirkt, durch eine Kopffläche 14 des Implantates 20 im Fußabschnitt des Zementierpfostens 13 gebildet. Das an die Konfiguration des Implantates 20 angepasste Aufbauteil 25 besitzt in seinem Basisbereich wiederum eine Aufnahmebohrung 7, in die der Lösezapfen 8 des Löseinstruments 11 - strichpunktiert dargestellt - eingesteckt wird. In einer alternativen Ausführung hierzu bildet gemäß Fig. 3 ein Implantat 26, in das ein Zementierpfosten 27 eingeschraubt ist, das Basisteil für das erfindungsgemäße Implantat-Prothetik-System, wobei die Anlageschulter 6 für den Lösezapfen 8 des Löseinstrumentes 11 gemeinsam durch eine Kopffläche 14 des Implantates 26 und eine Auflagefläche 28 des Zementierpfostens 27 gebildet werden kann.

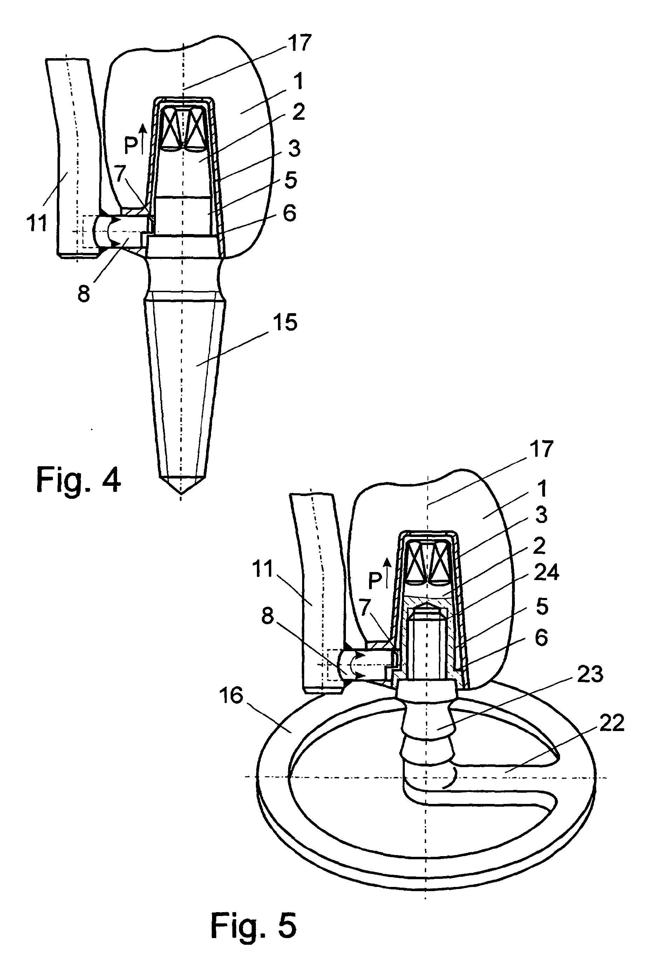

Eine vorteilhafte Ausführungsform der Erfindung zeigt Fig. 4, wobei das Schraubimplantat 15 und das erfindungsgemäß ausgebildete Abutment 2 zu einem einstückigen Element zusammengefaßt sind. Das nach der Erfindung mit einer Aufnahmebohrung 7 für einen Lösezapfen 8 ausgestattete Aufbauteil 2 ist auf das Abutment 2 aufgesteckt und durch Zementierung oder durch eine Klebeschicht mit diesem verbunden. Die Hebefläche 9 des zum Lösen der Verbindung Abutment 2 / Aufbauteil 3 in die Aufnahmebohrung 7 eingesteckten Lösezapfens 8 wirkt, wie vorstehend beschrieben, wiederum mit der Anschlagschulter 6 des Abutments 2 zusammen.

Basisteil für das erfindungsgemäße Implantat-Prothetik-System nach Fig. 5 ist ein lateral in den Ober- oder Unterkieferknochen einzusetzendes basalosseointegrierbares Implantat 16. Das nach der Erfindung ausgebildete Abutment 2 zur Aufnahme des als Kronen- oder Brückenbasis dienenden prothetischen Aufbauteiles 3 ist auf das Kopfgewinde 24 des Schaftes 23 aufgeschraubt, der über einen Steg 22 mit dem ringförmigen Fuß des Implantates 16 verbunden ist. Das Lösen der kraftschlüssigen Verbindung zwischen dem prothetischen Aufbauteil 3 und dem Abutment 2 erfolgt wiederum vermittels der durch Hebelwirkung des in die Aufnahmebohrung 7 eingesetzten Löseinstruments 11 hervorgerufenen Hebekraft P in Richtung der Längsachse 17.

Das als Kronen- oder Brückenbasis dienende prothetische Aufbauteil 2 kann aus einem geeigneten Metall (Gold, Titan, Stahl) vorgefertigt sein und wird, erforderlichenfalls nach nochmaligen Anpassungsarbeiten an die endgültige Zahnstellung, mit dem Kronen- oder Brückenmaterial überblendet.

Das prothetische Aufbauteil 2 kann aber auch aus einem schmelzbaren Material (Kunststoff, Wachs) vorgefertigt sein und wird nach dem Aufmodellieren in einem Ausschmelz-Gieß-Verfahren in Metall gegossen.

Vor und während der Herstellung der kraftschlüssigen Verbindung zwischen Abutment 2 und dem prothetischen Aufbauteil 3 wird die Aufnahmebohrung 7 durch einen geeigneten Stopfen, der sich relativ leicht aus der Bohrung wieder entfernen lässt, dicht verschlossen. Dadurch ist gesichert, dass die Aufnahmebohrung 7 nicht verstopft wird und zum Einsetzen des Löseinstrumentes 11 jederzeit zugänglich ist. Der Stopfen verhindert gleichzeitig Eintrag von Bakterien und Verschmutzungen.

### BEZUGSZEICHENAUFSTELLUNG

- 1: Krone
- 2: Abutment
- 3: prothetisches Aufbauteil (Kronen- /Brückenbasis)
- 4: Gewinde
- 5: zyl. Abschnitt
- 6: Anlageschulter
- 7: Aufnahmebohrung
- 8: Lösezapfen
- 9: Hebefläche
- 10: Aussparung
- 11: Löseinstrument
- 12: Längsachse
- 13: Zementierpfosten
- 14: Kopffläche
- 15: Schraubimplantat
- 16: Implantat
- 17: Längsachse
- 18: Stimfläche
- 19: Abstützbasis
- 20: Implantat
- 21: Implantat
- 22: Steg
- 23: Schaft
- 24: Kopfgewinde
- 25: Aufbauteil
- 26: Implantat
- 27: Zementierpfosten
- 28: Auflagefläche

## Patentansprüche

1. Dentales Implantat-Prothetik-System, bestehend aus einem in den Knochen eines Ober- oder Unterkiefers einzusetzenden Implantatkörper (15; 16; 20; 21) und einem Abutment (2) zur Aufnahme eines Brückengerüstes oder eines anderweitigen Prothetikteiles und einem Löseinstrument (11) zum Lösen einer durch Zementierung hergestellten Verbindung zwischen einem die Prothetik tragenden Aufbauteil (3) und einem Abutment (2), wobei das Aufbauteil (3) eine temporär verschließbare Öffnung besitzt in die das Löseinstrument (11) eingesetzt wird und mit diesem Instrument durch Hebelwirkung eine zum Kopf des Implantats gerichtete Kraft P erzeugt wird, die die Verbindung zwischen dem Aufbauteil (3) und dem Abutment (2) löst, **dadurch gekennzeichnet, dass** das Aufbauteil (3) im seinem Basisbereich eine in etwa horizontal zur Längsachse (17) des Implantates angeordnete Aufnahmebohrung (7) als temporär verschließbare Öffnung und das Abutment (2) eine Anlageschulter für einen in die Aufnahmebohrung (7) einzusteckenden Lösezapfen (8) des Löseinstrumentes (11) besitzt, der stirnseitig mit einer Hebefläche (9), die mit der Anlageschulter (6) zusammenwirkt, versehen ist, und durch Drehen des Lösezapfens (8) in der Aufnahmebohrung (7) um seine Längsachse (12) die Hebefläche (9) auf der Anlageschulter (6) zur Auflage kommt, wodurch eine Hebelwirkung hervorgerufen und die Kraft P erzeugt wird.

2. Dentales Implantat-Prothetik-System nach Anspruch 1, **dadurch gekennzeichnet, dass** das Aufbauteil (3) auf einen Zementierpfosten (13) eines Implantatkörpers (20) aufgesetzt ist und die Anlageschulter (6) für die Hebefläche (9) des in die Aufnahmebohrung (7) des Aufbauteiles (3) einzusteckenden Lösezapfens (8) durch eine Kopffläche (14) des Implantatkörpers (20) gebildet ist.

3. Dentales Implantat-Prothetik-System nach Anspruch 1, **dadurch gekennzeichnet, dass** der Implantatkörper ein Schraubimplantat (15) ist und das Abutment (2), das mit dem Schraubimplantat (15) einstückig ausgebildet ist, eine Anlageschulter (6 ) aufweist, die mit der Hebefläche (9) des in die Aufnahmebohrung (7) des Aufbauteiles (3) einzusetzenden Lösezapfens (8) kommuniziert.

4. Dentales Implantat―Prothetik-System nach Anspruch 1, **dadurch gekennzeichnet, dass** der Implantatkörper ein lateral einzusetzendes, basalosseointegrierbares Implantat (16) ist und das Abutment (2) zur Aufnahme des Aufbauteiles (3) auf das Kopfgewinde (24) des Schaftes (23) aufgeschraubt ist.

5. Dentales Implantat-Prothetik-System nach einem der Ansprüche 1 bis 4, **dadurch gekennzeichnet, dass** das Abutment (2) einen zylindrischen Abschnitt (5) besitzt, der zusammen mit der Abstützbasis (19) die Anlageschulter (6) bildet.

6. Dentales Implantat―Prothetik-System nach Anspruche 1, **dadurch gekennzeichnet, dass** die Hebefläche (9) eine Kurve ist, die in den Außenmantel des Lösezapfens (8) übergeht und zur Längsachse (12) eine zunehmende Steigung besitzt.

7. Dentales Implantat-Prothetik-System nach Anspruch 1, **dadurch gekennzeichnet, dass** die Aufnahmebohrung (7) durch einen Stopfen aus elastischem Material verschlossen ist.

8. Dentales Implantat―Prothetik―System nach Anspruch 1, **dadurch gekennzeichnet, dass** die Aufnahmebohrung (7) durch ein mit dem prothetischen Aufbauteil (3) verschraubtes Element verschlossen ist.

9. Dentales Implantat-Prothetik-System nach einem der Ansprüche 1 bis 4, **dadurch gekennzeichnet, dass** das prothetische Aufbauteil (3) aus einem geeigneten Metall vorgefertigt ist und mit gewünschtem Kronen- oder Brückenmaterial verblendet wird.

10. Dentales Implantat-Prothetik-System nach einem der Ansprüche 1 bis 4, **dadurch gekennzeichnet, dass** das prothetische Aufbauteil (3) aus einem schmelzbaren Material vorgefertigt und nach Aufmodellierung in Metall gegossen wird.

11. Löseinstrument zum Lösen einer durch Zementierung hergestellten Verbindung zwischen einem die Prothetik tragenden Aufbauteil (3) und einem Abutment (2) oder Zementierpfosten (13), eines dentalen Implantat-Prothetik-System, bestehend aus einem in den Knochen eines Ober- oder Unterkiefers einzusetzenden Implantatkörper (15; 16; 20; 21) und einem Abutment (2) oder Zementierpfosten (13) zur Aufnahme eines Brückengerüstes oder eines anderweitigen Prothetikteiles, gemäß Anspruch 1 **dadurch gekennzeichnet, dass** an einem einarmigen Hebel ein Lösezapfen (8) mit einer eine Hebelwirkung hervorrufenden Hebefläche (9) fest angeordnet ist.

12. Löseinstrument nach Anspruch 12, **dadurch gekennzeichnet, dass** der Lösezapfen (8) in eine Aufnahmebohrung (7) eines als Kronen- oder Brückenbasis dienenden prothetischen Aufbauteiles (3) einsetzbar ist und durch Drehen um seine Zapfenlängsachse (12) eine Hebelwirkung erzeugt wird, die eine kraftschlüssige Verbindung zwischen einem prothetischen Aufbauteil (3) und einem Abutment (2) oder Zementierpfosten (13) löst.

## Claims

1. Dental implant/restoration system comprising an implant body (15; 16; 20; 21) to be inserted into the bone of an upper or lower jaw and an abutment (2) to hold a bridge or other prosthetic part and a removal instrument (11) to separate a cemented bond between a reconstructive component (3) holding the prosthetic restoration and an abutment (2), with the reconstructive component (3) having a temporarily closable opening into which the removal instrument (11) is inserted and a force P directed toward the head of the implant is generated by a lever action of this instrument, separating the connection between the reconstructive component (3) and the abutment (2), **characterized in that** the reconstructive component (3) has in its base region a receiving hole (7) placed approximately horizontally with respect to the longitudinal axis (17) of the implant, as a temporarily closable opening, and the abutment (2) has a locating shoulder (6) for a separating pin (8) of the removal instrument (11) that is inserted into the receiving hole (7) and has at its forward end a lifting surface (9) which interacts with the locating shoulder (6) and when the separating pin (8) in the receiving hole (7) is rotated about its longitudinal axis (12) the lifting surface (9) is forced against the locating shoulder (6) so that a lifting action is produced and the force P is generated.

2. Dental implant/restoration system according to Claim 1, **characterized in that** the reconstructive component (3) is placed on a cementing post (13) of an implant body (20) and the locating shoulder (6) for the lifting surface (9) of the separating pin (8) that is to be inserted into the receiving hole (7) of the reconstructive component (3) is formed by a head surface (14) of the implant body (20).

3. Dental implant/restoration system according to Claim 1, **characterized in that** the implant body is a screw implant (15) and the abutment, which is designed in a single piece with the screw implant, has a locating shoulder (6) that communicates with the lifting surface (9) of the separating pin (8) that is to be inserted into the receiving hole (7) of the reconstructive component (3).

4. Dental implant/restoration system according to Claim 1, **characterized in that** the implant body is an implant (16) that can be integrated basally osseointegrated and which is inserted laterally and the abutment (2) to hold the reconstructive component (3) is screwed onto the head thread (24) of the shaft (23).

5. Dental implant/restoration system according to one of Claims 1 to 4, **characterized in that** the abutment (2) has a cylindrical segment (5) which, together with the supporting base (19), forms the locating shoulder (6).

6. Dental implant/restoration system according to Claim 1, **characterized in that** the lifting surface (9) is a curve that transforms into the outer surface of the separating pin (8) and has a slope that increases toward the longitudinal axis (12).

7. Dental implant/restoration system according to Claim 1, **characterized in that** the receiving hole (7) is closed by a plug of elastic material.

8. Dental implant/restoration system according to Claim 1, **characterized in that** the receiving hole (7) is closed by an element screwed into the prosthetic reconstructive component (3).

9. Dental implant/restoration system according to one of Claims 1 to 4, **characterized in that** the prosthetic reconstructive component (3) is pre-fabricated from a suitable metal and veneered with the desired crown or bridge veneering material.

10. Dental implant/restoration system according to one of Claims 1 to 4, **characterized in that** the prosthetic reconstructive component (3) is made of a fusible material and is cast in metal after it has been modeled.

11. Removal instrument for separating a cemented bond between a reconstructive component (3) holding the prosthetic restoration and an abutment (2) or cementing post (13) of a dental implant/restoration system comprising an implant body (15; 16; 20; 21) to be inserted into a bone of the upper or lower jaw and an abutment (2) or cementing post (13) to hold a bridge or other prosthetic part according to Claim 1, **characterized in that** a separating pin (8) with a lifting surface (9) producing a lifting action is firmly attached to a single-arm lever.

12. Removal instrument according to Claim 12, **characterized in that** the separating pin (8) can be inserted into a receiving hole (7) of a prosthetic reconstructive component (3) acting as the base for a crown or bridge, and that rotation of the pin (8) about its longitudinal axis (12) produces a lifting action that breaks a forced-fit connection between a prosthetic reconstructive component (3) and an abutment (2) or cementing post (13).

## Revendications

1. Système prothétique d'implant dentaire composé d'un corps d'implant (15; 16; 20; 21) destiné à être inséré dans l'os du maxillaire ou de la mandibule et d'une butée (2) destinée à recevoir une structure de bridge ou un autre élément de prothèse ainsi que d'un instrument de descellement (11) destiné à desceller un assemblage obtenu par scellement entre une partie d'infrastructure (3) portant la prothèse et une butée (2), la partie d'infrastructure (3) possédant une ouverture qui peut être temporairement obturée et étant insérée dans l'instrument de descellement (11) et une force P dirigée vers la tête de l'implant étant produite avec cet instrument par un effet de levier pour défaire la liaison entre la partie d'infrastructure (3) et la butée (2), **caractérisé en ce que** la partie d'infrastructure (3) possède dans sa partie de base un trou de logement (7) disposé à peu près horizontalement par rapport à l'axe longitudinal (17) de l'implant et qui forme une ouverture pouvant être obturée temporairement et la butée (2) possède un épaulement d'appui (6) pour un goujon de descellement (8) de l'instrument de descellement (11) à introduire dans le trou de logement (7), lequel est pourvu sur sa face frontale d'une surface de levage (9) coopérant avec l'épaulement d'appui (6), et la surface de levage (9) vient reposer sur l'épaulement d'appui (6) lorsque le goujon de descellement (8) tourne dans le trou de logement (7) autour de son axe longitudinal (12), ce qui crée un effet de levier et produit la force P.

2. Système prothétique d'implant dentaire selon la revendication 1, **caractérisé en ce que** la partie d'infrastructure (3) est posée sur un pilier de scellement (13) d'un corps d'implant (20) et l'épaulement d'appui (6) pour la surface de levage (9) du goujon de descellement (8) à introduire dans le trou de logement (7) de la partie d'infrastructure (3) est formé par une surface supérieure (14) du corps d'implant (20).

3. Système prothétique d'implant dentaire selon la revendication 1, **caractérisé en ce que** le corps d'implant est un implant-vis (15) et la butée (2), qui est formée d'un seul tenant avec l'implant-vis (15), possède un épaulement d'appui (6) qui communique avec la surface de levage (9) du goujon de descellement (8) devant être introduit dans le trou de logement (7) de la partie d'infrastructure (3).

4. Système prothétique d'implant dentaire selon la revendication 1, **caractérisé en ce que** le corps d'implant est un implant à ostéo-intégration basale (16) destiné à être implanté latéralement et la butée (2) destinée à recevoir la partie d'infrastructure (3) est vissée sur le filetage supérieur (24) de la tige (23).

5. Système prothétique d'implant dentaire selon l'une quelconque des revendications 1 à 4, **caractérisé en ce que** la butée (2) possède une partie cylindrique (5) qui forme l'épaulement d'appui (6) avec la base de support (19).

6. Système prothétique d'implant dentaire selon la revendication 1, **caractérisé en ce que** la surface de levage (9) est une courbe qui va jusqu'à l'enveloppe extérieure du goujon de descellement (8) et s'élève vers l'axe longitudinal (12).

7. Système prothétique d'implant dentaire selon la revendication 1, **caractérisé en ce que** le trou de logement (7) est obturé par un bouchon en matériau élastique.

8. Système prothétique d'implant dentaire selon la revendication 1, **caractérisé en ce que** le trou de logement (7) est obturé par un élément vissé sur la partie d'infrastructure prothétique (3).

9. Système prothétique d'implant dentaire selon l'une quelconque des revendications 1 à 4, **caractérisé en ce que** la partie d'infrastructure prothétique (3) est préfabriquée dans un métal approprié est habillée de facettes dans le revêtement de couronne ou de bridge souhaité.

10. Système prothétique d'implant dentaire selon l'une quelconque des revendications 1 bis 4, **caractérisé en ce que** la partie d'infrastructure prothétique (3) est préfabriquée dans un métal fusible et coulée dans le métal après modelage.

11. Instrument de descellement pour le descellement d'une liaison obtenue par scellement entre une partie d'infrastructure (3) portant la prothèse et une butée (2) ou un pilier de scellement (13) dans un système prothétique d'implant dentaire, composé d'un corps d'implant (15; 16; 20; 21) destiné à s'insérer dans l'os d'un maxillaire ou d'une mandibule et d'une butée (2) ou d'un pilier de scellement (13) destinés à recevoir une structure de bridge ou un autre élément de prothèse selon la revendication 1, **caractérisé en ce qu'**un goujon de descellement (8) pourvu d'une surface de levage (9) produisant l'effet de levier est disposé de manière fixe sur un levier à un bras.

12. Instrument de descellement selon la revendication 12, **caractérisé en ce que** le goujon de descellement (8) peut être introduit dans un trou de logement (7) d'une partie d'infrastructure prothétique (3) servant de base à une couronne ou un bridge et sa rotation autour de son axe longitudinal (12) crée un effet de levier qui défait un assemblage par adhérence entre une partie d'infrastructure prothétique (3) et une butée (2) ou un pilier de scellement (13).
